**Europäisches Patentamt**

**European Patent Office**

**Office européen des brevets**

(19)

(11) Numéro de publication: **0 042 464**
**B1**

(12)

# FASCICULE DE BREVET EUROPEEN

(45) Date de publication du fascicule du brevet:
07.03.84

(51) Int. Cl.³: **G 01 F 17/00,** G 01 F 23/28

(21) Numéro de dépôt: 80400956.1

(22) Date de dépôt: 25.06.80

(54) Jauge électronique comportant un émetteur-capteur d'ultra-sons.

(43) Date de publication de la demande:
30.12.81 Bulletin 81/52

(45) Mention de la délivrance du brevet:
07.03.84 Bulletin 84/10

(84) Etats contractants désignés:
**AT BE CH DE FR GB IT LI SE**

(56) Documents cités:
**DE - A - 2 429 495**
**DE - A - 2 444 222**
**DE - B - 1 287 811**
**FR - A - 1 477 470**
**FR - A - 2 133 590**
**US - A - 4 145 914**

(73) Titulaire: **EQUIPMENT INDUSTRIEL NORMAND,**
**F-14540 Grentheville près Caen (FR)**

(72) Inventeur: **Coquerel, Claude, F-14540 Grentheville près**
**Caen (FR)**
Inventeur: **Coquerel, Michel, Villa Le Havenet,**
**F-14113 Villerville sur Mer (FR)**

(74) Mandataire: **Madeuf, Claude Alexandre Jean et al,**
**CABINET MADEUF 3, avenue Bugeaud, F-75116 Paris**
**(FR)**

ACTORUM AG

Jauge électronique comportant un émetteur-capteur d'ultrasons

De nombreuses difficultés existent pour mesurer et lire le volume d'un liquide placé à l'intérieur d'un réservoir enterré. C'est d'ailleurs le cas de tous les réservoirs à essence, à supercarburant, etc., des stations-service. En effet, il est absolument nécessaire, pour le gérant de la station-service, de connaître en permanence ses stocks et de pouvoir contrôler s'il ne se produit pas de fuites inexplicables dues soit au vol, soit à la mauvaise étanchéité d'un réservoir ou d'une canalisation. Jusqu'à présent, on a surtout employé, en matière d'hydrocarbures, des sondes à flotteur ou tout simplement des jauges manuelles plongées à l'intérieur du réservoir, mais ces moyens n'ont pas donné satisfaction car, pour les liquides très volatils comme l'essence et le supercarburant, un alvéole gazeux se manifeste à la surface du liquide relevé et provoque une augmentation de l'imprécision de la mesure du stock réel. Pour les jauges par introduction, le fait de les placer dans le réservoir soit avec précaution, soit brutalement, donne des résultats différents et, en outre, les grandes compagnies pétrolières ont constaté que la pige de jauge produit progressivement une déformation du fond du réservoir à l'emplacement invariable du point de repos de cette pige. On provoque ainsi une moindre résistance du réservoir et parfois même sa perforation. C'est pourquoi, depuis peu d'ailleurs, les réservoirs des stations-service de ces grandes compagnies pétrolières comportent, à l'emplacement de la jauge, là où tombe la pige, des plaques de touche. Cependant, le fait de laisser tomber la jauge risque de provoquer également d'autres ennuis plus ou moins graves et on a également constaté que le mauvais vissage du bouchon-tirelire de jauge placé en général sur le trou d'homme provoque des fuites de gaz ou de liquides, surtout lorsque ceux-ci sont très volatils, au moment du remplissage des réservoirs.

D'autres risques existent, notamment l'entrée d'eau lors de pluies torrentielles.

L'ensemble de ces inconvénients est complété par le fait que la jauge à pige manuelle ne permet pas une possibilité de gestion correcte des stocks ni, par conséquent, un contrôle permanent avec alarme. En effet, en cas d'une fuite technique, le gérant de la station-service ne se rend compte de ces fuites qu'après un certain laps de temps, ce qui peut conduire à des catastrophes telles que perte de carburant, explosions, etc. Le danger est augmenté lorsqu'on se trouve sur des stations-service très importantes, par exemple des stations-service d'autoroutes qui délivrent plus de 100 m³ de carburant par jour.

Les dispositifs de jauge semi-automatique tels que jauge à ruban avec flotteur, jauge pneumatique, jauge à capteur capacitif sont peu utilisés, car ils sont en général dangereux et les capteurs capacitifs sont en outre très coûteux.

Les réservoirs de carburant sont généralement enterrés et peuvent présenter des décalages angulaires, ce qui ne facilite pas les mesures ni la lecture du volume du liquide placé à l'intérieur du réservoir considéré.

On connaissait déjà, du fait de la demande de brevet allemand publiée avant examen DE-A No 2429495, un système émetteur-capteur d'ultrasons constitué par une jauge électronique destinée à mesurer la quantité d'un liquide quelconque dans un réservoir, le positionnement vertical de l'émetteur-capteur d'ultrasons étant obtenu par le déplacement d'une buse 12 dont le pied 14 a une forme semi-hémisphérique coopérant avec un évidement également semi-hémisphérique creusé dans la partie supérieure d'une bride 16 solidaire du trou d'homme 19 du réservoir considéré 20. Un joint d'étanchéité 12 est écrasé entre les deux portées hémisphériques, précitées par l'intermédiaire d'une bride supérieure 15 coopérant avec la bride 16 au moyen d'organes de serrage 18. Ce dispositif cependant nécessite une réalisation de deux portées hémisphériques et, de plus, nécessite la mise en place d'un joint qui doit être correctement placé pour éviter des fuites gazeuses dangereuses.

La présente invention remédie à ces inconvénients en créant un ensemble émetteur-capteur d'ultrasons constituant une jauge électronique, qui comporte à sa partie supérieure un niveau à bulle sphérique solidaire de la sonde, ce qui permet son positionnement vertical, quel que soit le mauvais niveau du réservoir ou du plateau de trou d'homme; ce dispositif garantit l'efficacité sans dérive possible et l'obtention de données sans aucun danger qui déterminent le volume vide du réservoir, le volume du liquide restant dans le réservoir, en permettant ainsi au gérant, dans le cas de stations-service, de commander exactement, en temps voulu, les quantités de carburant dont il a besoin.

Conformément à l'invention, la jauge électronique comporte un émetteur-capteur d'ultrasons à symétrie cylindrique pour la mesure de la quantité d'un liquide quelconque contenu dans un réservoir enterré, en particulier de produits légers et déflagrants du pétrole, dans laquelle il est prévu, dans un espace situé sur le trou d'homme du réservoir, un collet solidaire dudit trou d'homme, ladite jauge électronique permettant un positionnement vertical de l'axe dudit émetteur-capteur d'ultrasons, caractérisée en ce que le collet est taraudé intérieurement et est destiné à recevoir un manchon à symétrie cylindrique fileté extérieurement sur sa partie inférieure et vissé dans le collet, le manchon étant prolongé à sa partie supérieure par un corps dont la face supérieure est inclinée par rapport à l'axe du manchon et qui peut coopérer avec un chapeau à symétrie cylindrique duquel est solidaire l'émetteur-capteur d'ultrasons et dont la face inférieure est inclinée par rapport à l'axe de ce chapeau de façon à permettre, lorsque la face inférieure du chapeau repose sur la face supérieure du manchon, une rotation conjuguée du manchon et du chapeau l'un par rapport à l'autre, le chapeau portant à sa partie supérieure un prolongement recevant, à son sommet, un niveau à bulle sphérique pour contrôler ainsi la verticalité de l'émetteur-capteur d'ultrasons.

Diverses autres caractéristiques de l'invention ressortent d'ailleurs de la description détaillée qui suit.

Une forme de réalisation de l'objet de l'invention est représentée, à titre d'exemple, aux dessins annexés.

La fig. 1 représente schématiquement un réservoir contenant un liquide et qui est muni, sur le panneau de trou d'homme, d'un collet destiné à recevoir la tête de l'émetteur-capteur d'ultrasons qui est reliée par un câble de transmission aux organes permettant la mesure du vide et de la partie de liquide restant dans le réservoir considéré.

La fig. 2 est une coupe-élévation à grande échelle du bloc émetteur-capteur d'ultrasons.

La fig. 3 est un plan correspondant à la fig. 2.

Les fig. 4 et 5 sont de petits schémas montrant le réglage possible de la tête du bloc émetteur-capteur d'ultrasons afin que celui-ci soit disposé bien verticalement par rapport au niveau du liquide dans la cuve.

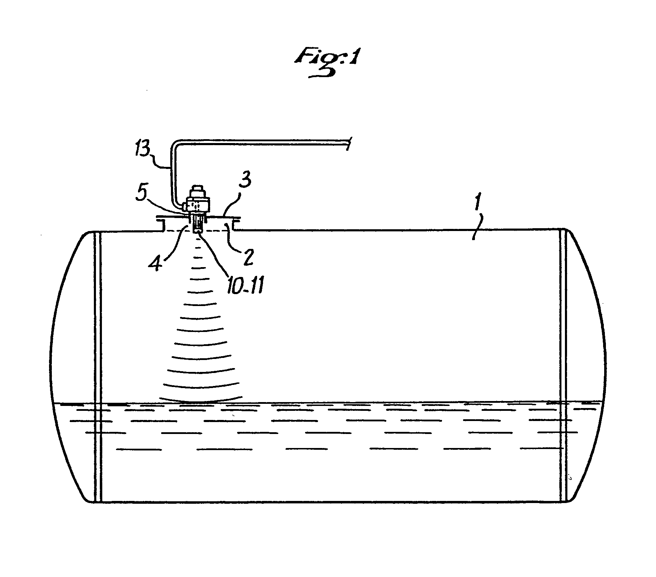

A la fig. 1, on a représenté un réservoir 1 qui est en général un réservoir enterré dont le trou d'homme 2 est fermé par un panneau 3 percé en son centre d'un orifice 4 qui a reçu un collet 5 sur lequel vient se placer une jauge électronique comportant un émetteur-capteur d'ultrasons 10, 11, la jauge et l'émetteur-capteur étant disposés concentriquement.

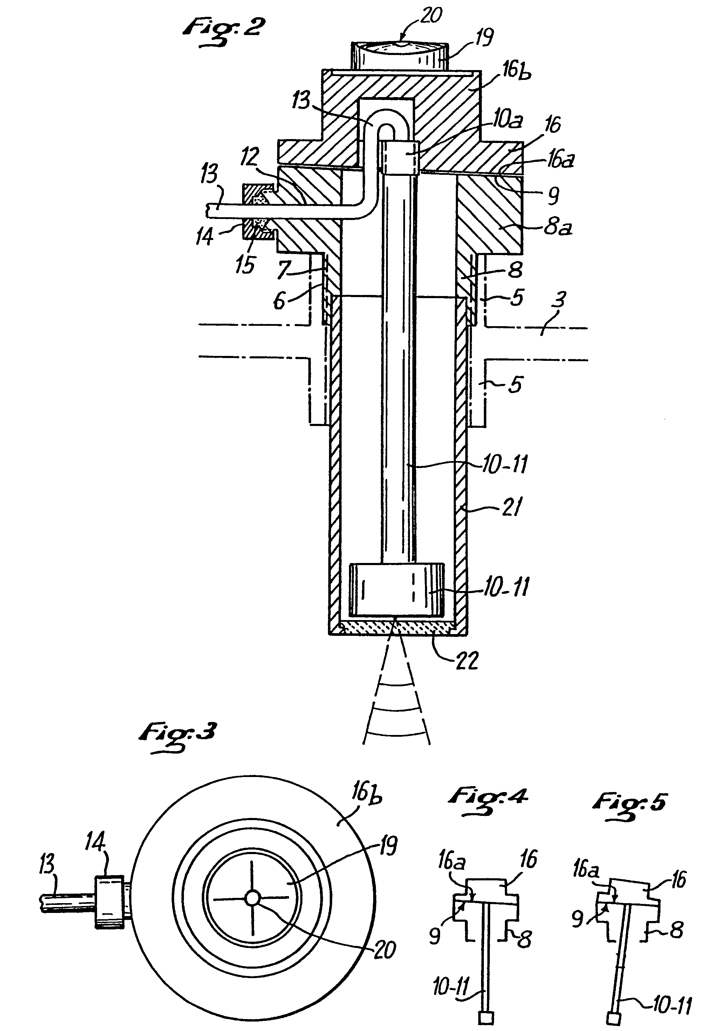

Comme on peut le voir à la fig. 2, la partie supérieure du collet 5 est taraudée en 6 de façon à pouvoir recevoir le filetage extérieur 7 d'un manchon 8 qui se prolonge à sa partie supérieure par un corps cylindrique 8a dont la face supérieure 9 est inclinée par rapport à l'axe du manchon 8. Le corps cylindrique 8a est percé radialement d'un canal 12 permettant le passage d'un conducteur électrique 13. Autour du conducteur électrique 13 sont placés un bouchon 14 et un joint 15. L'émetteur-capteur d'ultrasons 10, 11 est fixé par sa partie supérieure 10a sur un chapeau 16 dont la face inférieure 16a est inclinée par rapport à l'axe vertical central du chapeau 16 comme la face supérieure 9 du corps cylindrique 8a. Le conducteur 13 aboutit à la partie supérieure 10a de l'émetteur-capteur d'ultrasons. Le chapeau 16 de forme cylindrique est prolongé par une partie cylindrique 16b de plus petit diamètre qui reçoit à son sommet un niveau à bulle sphérique 19. 20 désigne la bulle du niveau.

Comme on peut évidemment visser plus ou moins le manchon 8 dans le collet 5, on peut ainsi, en faisant tourner sur lui-même le chapeau 16, faire coïncider au plus près l'axe de l'émetteur-capteur d'ultrasons 10, 11 avec une ligne verticale permettant un fonctionnement tout à fait correct de cet émetteur-capteur d'ultrasons 10, 11.

Par mesure de précaution, ce dernier est entouré à sa partie inférieure par un tube 21 solidaire du manchon 8. Finalement, le tube 21 est fermé à sa partie basse par un bouchon 22 perméable aux ultrasons.

Finalement, les fig. 4 et 5 montrent comment on peut amener aisément l'émetteur 10 dans la bonne position fig. 4 donnant la verticalité pour obtenir une mesure correcte.

Bien entendu, et sans que cela fasse partie de l'invention, les données transmises par l'émetteur-capteur d'ultrasons 10, 11 sont dirigées par le conducteur électrique 13 vers des moyens de calcul et un ou des tableaux d'affichage connus en eux-mêmes, en particulier par les brevets DE-B No 1287811 et US-A No 4145914.

## Revendication

Jauge électronique comportant un émetteur-capteur d'ultrasons à symétrie cylindrique pour la mesure de la quantité d'un liquide quelconque contenu dans un réservoir enterré, en particulier de produits légers et déflagrants du pétrole, dans laquelle il est prévu, dans un espace situé sur le trou d'homme du réservoir, un collet (5) solidaire dudit trou d'homme (2), ladite jauge électronique permettant un positionnement vertical de l'axe dudit émetteur-capteur d'ultrasons, caractérisée en ce que le collet qui est taraudé intérieurement est destiné à recevoir un manchon (8) à symétrie cylindrique fileté extérieurement sur sa partie inférieure et vissé dans le collet (5), le manchon (8) étant prolongé à sa partie supérieure par un corps (8a) dont la face supérieure (9) est inclinée par rapport à l'axe du manchon et qui peut coopérer avec un chapeau à symétrie cylindrique duquel est solidaire l'émetteur-capteur d'ultrasons et dont la face inférieure (16a) est inclinée par rapport à l'axe de ce chapeau de façon à permettre, lorsque la face inférieure (16a) du chapeau repose sur la face supérieure (9) du manchon, une rotation conjuguée du manchon et du chapeau l'un par rapport à l'autre, le chapeau portant à sa partie supérieure un prolongement (16b) recevant à son sommet un niveau à bulle sphérique (19) pour contrôler ainsi la verticalité de l'émetteur-capteur d'ultrasons.

## Patentanspruch

Elektronische Lehre mit einem zylinder-symmetrischen Ultraschallsender und -fühler zum Messen der Menge einer beliebigen, in einem im Boden versenkten Behälter enthaltenen Flüssigkeit, insbesondere von leichten und leicht anzündbaren Erdölprodukten, die in einem über dem Mannloch des Behälters vorgesehenen Raum einen mit dem Mannloch (2) festgebundenen Ring (5) aufweist, wobei die elektronische Lehre ein Einstellen der Achse des Ultraschallsenders und -fühlers in vertikaler Richtung gestattet, dadurch gekennzeichnet, dass der mit einem inneren Gewinde versehene Ring dazu bestimmt ist, eine zylinder-symmetrische Muffe (8) aufzunehmen, die auf ihrem unteren Teil ein äusseres Gewinde trägt und im Ring (5) eingeschraubt wird, wobei die Muffe (8) an ihrem oberen Teil eine Verlängerung (8a) aufweist, deren oberen Oberfläche (9) in bezug auf die Achse der Muffe geneigt ist und mit einer zylinder-symmetrischen Kappe (16) zusammenwirken kann, die mit dem Ultraschallsender und -fühler festgebunden ist und deren untere Oberfläche (16a) in bezug auf die Achse der Kappe geneigt ist, so dass sich die Muffe und die Kappe gegeneinander gekoppelt drehen können, wenn die untere Oberfläche (16a) der Kappe auf der oberen Oberfläche (9) der Muffe ruht, wobei die Kappe an ihrem oberen Teil eine Verlängerung (16b) aufweist, die an ihrem obersten Teil eine Wasserlibelle (19) zur Prüfung der senkrechten Stellung des Ultraschallsenders und -fühlers trägt.

**Claim**

Electronic gauge comprising an ultrasonic transmitter-receiver having a cylindrical symmetry for the measure of the quantity of any liquid contained in a buried tank, in particular light and deflagrating oil products, in which there is provided in a space placed on the man hole of the tank a collar (5) fixed with said man hole (2), said electronic gauge enabling a vertical positioning of the axis of said ultrasonic transmitter-receiver, characterized in that the collar which is innerly treaded is provided to receive a sleeve (8) having a cylindrical symmetry and outerly threaded on its lower part and screwed in the collar (5), the sleeve (8) being extended at its upper portion by a body (8a) the upper side (9) of which is inclined with respect to the axis of the sleeve and which can cooperate with a cap (16) having a cylindrical symmetry and to which is fixed the ultrasonic transmitter-receiver and the lower side (16a) of which is inclined with respect to the axis of this cap so as to enable, when the lower side (16a) of the cap lies on the upper face (9) of the sleeve, a conjugate rotation of the sleeve and of the cap the one with respect to the other, the cap carrying at its upper part an extension (16b) receiving at its top portion a spherical air level (19) for thereby checking the verticality of the ultrasonic transmitter-receiver.

Fig:1

**Fig. 2**

**Fig. 3**

**Fig. 4**

**Fig. 5**